# EUROPÄISCHE PATENTSCHRIFT

(11) **EP 1 717 384 B1**
(45) Veröffentlichungstag und Bekanntmachung des Hinweises auf die Patenterteilung: **14.10.2015**
(21) Anmeldenummer: 05009193.3
(22) Anmeldetag: 27.04.2005
(51) Int. Cl.: F24J 2/52, F24J 2/46, E04D 13/10, E04D 13/12, E04D 1/34, H02S 20/23

(54) **Halterung für Dachaufsatzkomponenten**
Roof accessories attachment
Fixation pour accessoires de toit

(43) Veröffentlichungstag der Anmeldung: 02.11.2006
(73) Patentinhaber: Wilhelm Flender GmbH & Co. KG, 57250 Netphen (DE)
(72) Erfinder: Herres, Armin, 56593 Pleckhausen (DE)
(74) Vertreter: Patentanwälte Olbricht Buchhold Keulertz

(56) Entgegenhaltungen:
- DE-A- 2 448 136
- DE-U- 9 109 605
- DE-U- 29 516 463

## Beschreibung

Die Erfindung betrifft eine Halterung für Dachaufsatzkomponenten gemäß dem Oberbegriff von Anspruch 1.

Herkömmlich hat man zum Anbringen von Dachzubehör langgestreckte Lochzungen, Haltebänder u.dgl. verwendet, die an einen Sparren, eine Dachlatte oder an Hilfsträger genagelt oder geschraubt wurden. Dies brachte oft Verzögerungen bei der Montage mit sich. Auch konnte es sehr schwierig sein, nach langer Zeit die festgenagelten bzw. festgeschraubten Zungen zu entfernen, was beim Neu-Eindecken eines Dachs notwendig ist.

Andere Halterungen z.B. gemäß DE 198 18 301 A1 benutzen eine Konsole in Form eines ∩-Profils, das mit auswärts abgekanteten Schenkeln auf der Dachfläche ruht. Auch hier ist eine Verschraubung vorgesehen, und zwar durch die Dachfläche sowie einen Stützkörper hindurch mit einer an einer Dachlatte einhängbaren Gegenplatte. Das Durchbohren der Dachfläche bedingt Abdichtungsmittel, die jeweils einen ganzen Bereich um die Verschraubung herum abdecken müssen, was unverhältnismäßig großen Aufwand erfordert.

Weitere Halterungen sind beispielsweise aus der DE-A-2448136, der DE-U-9109605 und der DE-U-295 16 463 bekannt. Die DE-U-9109605 offenbart alle Merkmale des Oberbegriffs des Anspruchs 1.

Allen solchen Systemen ist gemeinsam, daß zum Anbringen von Dachzubehör an geneigten Dächern die Halterungen in vorgegebenen Linien bzw. Zonen genau fluchten müssen, weil langgestreckte Elemente wie Rohre, Rundhölzer, Schneefanggitter u.dgl. wegen ihrer großen Steifigkeit Ausgleichsbiegungen kaum oder nicht zulassen. Durch uneben verlegte Dachdeckmittel, also Dachziegel bzw. -pfannen, aber auch durch unterschiedliche Sparrenhöhen oder -abstände entstehen daher häufig Schwierigkeiten oder sogar Schäden.
Ein wichtiges Ziel der Erfindung ist es, mit geringem Aufwand verbesserte Möglichkeiten zum korrekten Anbringen von Dachzubehör wie Schneefangstützen, Trittstufen, Dachhaken, Solarkollektoren u.dgl. zu schaffen. Vor allem soll die Befestigung auf der Dachhaut den örtlich gegebenen Verhältnissen leicht und genau angepaßt werden können. Angestrebt wird ferner bequeme und schnelle Montage entsprechend der jeweiligen Befestigungsaufgabe.

Hauptmerkmale der Erfindung sind in Anspruch 1 angegeben. Ausgestaltungen sind Gegenstand der Ansprüche 2 bis 21.

Eine Halterung zum Befestigen von Dachzubehör auf geneigten Dächern, insbesondere aus Metall, besteht laut Anspruch 1 erfindungsgemäß aus drei miteinander über Langloch-Verbindungen einstellbar verschraubten Stützkomponenten, nämlich zwei Hakenteilen und einem als tragendes Brückenteil ausgebildeten Zwischenglied, wobei wobei die Hakenteile jeweils einen Tragschenkel aufweisen und durch justier- und verschraubbare Langloch-Verbindungen miteinander verbindbar sind.

Die drei Komponenten der doppelten Haken-Halterung sind überaus einfach, rasch und exakt montierbar. Sie ermöglichen beispielsweise die fluchtende Befestigung von Trägern wie Schienen oder C-Profilen, die als Befestigungsunterbau für das Dachzubehör dienen können, z.B. für Solarkollektoren. Die winkel- und auch abstandsveränderliche Justier- und Verschraubbarkeit des neuartigen Brückenelements erlaubt es, die Positionierung zur Dachhaut mittels der Halterung nach Bedarf einzustellen. Auch als Verstärkung bei Dachaufbauten ist die Halterung mit Vorteil einsetzbar.

Die Hakenteile sind ein oberes Hakenteil mit einem langen Tragschenkel und ein unteres Hakenteil mit einem kurzen Tragschenkel. Jeder Tragschenkel weist eine davon im Winkel, insbesondere an einem Ende im rechten Winkel abstehende Langloch-Lasche auf. . Ein oberes Ende jedes Hakenteils hat einen U-artigen Bügel, der nach unten Ende frei in einen Längs- oder Querschenkel ausläuft, welcher näherungsweise parallel Langloch der Lasche des benachbarten, z.B, des kurzen Tragschenkels verläuft. Diese sich kreuzende Langloch-Anordnung erlaubt diverse Einstellungen in weitem Bereich.

Zur Steigerung der Festigkeit kann zumindest der lange Tragschenkel vor allem in seinem mittleren und/oder unteren Bereich ein erhöhtes Querschnitts-Widerstandsmoment haben, z.B. durch Versteifung mittels einer Wölbung. Sicke u.dgl., wie in DE-U-203 00 503 beschrieben.

Indem das vorzugsweise einen spitzwinkligen oder trapezförmigen Grundkörper aufweisende Brückenteil zu dem oberen Hakenteil hin, d.h. nahe einer Winkelspitze, ein Rundloch hat und durch dieses hindurch mit dem Langloch der Lasche des benachbarten. z.B. des langen Tragschenkels verschraubbar ist, kann das Brückenteil mühelos in seiner Neigung zu den damit verbundenen Hakenteilen verstellt werden. Dank dieser Schwenkbarkeit läßt sich auf dem Brückenteil zu befestigendes Dachzubehör nahe an die Dachhaut heranbringen und z.B. im Fall einer Solarkollektorfläche gemäß dem örtlich gegebenen Sonnen-Einfallswinkel einstellbar montieren.

Das Brückenteil kann als ebene, nach unten verbreiterte Wange gestaltet sein, an der sich seitlich verschiedene Bauteile anbringen lassen. Bei einer vorteilhaften Bauform ist das Brückenteil einstückig mit einer hochkantstehenden Stütze, die einander zugewandte Aufnahmeöffnungen zum Einsetzen eines Schneefangelements aufweist, beispielsweise eines Schneefanggitters wie aus DE-U-203 00 503 an sich bekannt. Alternativ ist das Brückenteil oben zur Bildung eines Tragwinkels abgekantet, der zur Befestigung von Dachzubehör eine Auflagefläche aufweist, was namentlich für die Anbringung schienen-, block- oder plattenförmiger Aufsätze vorteilhaft ist. Die Auflagefläche und/oder eine mit ihr verbundene Winkelfläche kann dazu mit wenigstens einem Langloch oder Schlitz versehen sein.

Indem der oder ein Schenkel jedes Hakanteils mindestens zwei nach oben bzw. innen abstehende, insbesondere federelastische Sicherungsflügel trägt, erfolgt namentlich unter Last eine sichere Fixierung an der Unterseite einer Dachlatte, auf der Dachziegel liegen; über diese und über die Latte greift der Bügel. Man kann Belastungen durch Windsagkräfte, Schnee lasten u.dgl. dadurch Rechnung tragen, daß zumindest in den seitlichen Dachrandbereichen jeweils wenigstens zwei Halterungen angeordnet werden, deren Bügel wenigstens zwei Dachlatten (samt aufgebrachten Dachziegeln) umgreifen, an denen sie durch die Sicherungsflügel fixiert sind.

Eine Halterung der genannten Art mit zwei Hakenteilen, die jeweils einen oberen Tragschenkel und einen U-artigen Bügel aufweisen, welcher frei in einen unteren (Längs-) Schenkel ausläuft, zeichnet sich in vorteilhafter Weiterbildung dadurch aus, daß der Bügel zum Übergreifen des Kopfendes von Dachdeckmitteln und/oder einer Dachlatte deren Profil angepaßt ist, wobei der untere Schenkel an sich bekannte, starre oder elastische Rast- bzw. Arretiermittel zum kraft- und/oder formschlüssigen Angriff an der Unterseite des Kopfendes bzw. der Dachlatte aufweist. Dies gewährleistet dauerhaft festen Sitz der Halterung und der montierten Dachzubehör-Komponente(n). Dabei ist es günstig, wenn als Rast- bzw. Arretiermittel wenigstens zwei beabstandete Sicherungsflügel nebeneinander angeordnet sind, die untereinander einstückig ausgebildet, aber auch mit dem Längsschenkel einstückig oder start verbunden sein können. Sie greifen von unten am Dachunterbau an und bewirken so eine weitere, zuverlässige Abstützung der Halterung.

Bevorzugt sind die Rast- bzw. Arretiermittel aus Drahtmaterial oder flächigem Blechmaterial gefertigt und/oder plastisch verfivrmbar, so daß die Fixierung am Dachunterbau ebenso einfach wie sicher erzielbar ist. Die Anbringung wird erleichtert, indem der Längsschenkel als Federzunge ausgebildet ist, die zur Profil-Anpassung unter Bildung von Schultern treppenförmig abgesetzt sein kann. Das trägt weiter zur Stabilität der montierten Halterung bei.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Darin zeigen:
Fig. 1 eine Schrägansicht von an Dachlatten angebrachten Halterungen.
Fig. 2 eine Draufsicht auf die Anordnung von Fig. 1,
Fig. 3 eine Seitenansicht zweier Halterungen mit einer Solarkollektorplatte,
Fig. 4 eine Schrägansicht der Anordnung von Fig. 3 von vorne/oben.
Fig. 5 eine Schrägansicht der Anordnung von Fig. 3 bzw. 4 von hinten/unten,
Fig. 6 eine Schrägansicht eines Hakenteils mit verstellbaren Flügeln,
Fig. 7 eine Seitenansicht des Hakentells von Fig. 6 mit aufgesetzter Schiene und
Fig. 8 eine Seitenansicht zweier Hakenteile nach Fig. 7 mit einem abgewandelten Brückenteil.

Die in den Zeichnungen allgemein mit 10 bezeichnete Halterung dient zur Befestigung von vorzugsweise metallischem Dachzubehör auf geneigten Dächern, wobei in der Beschreibung generell "oben = zum First hin bzw. von der Dachhaut weg" und "unten = zur Traufe hin bzw. zu der Dachhaut hin" bedeutet.

Charakteristisch sind ein oberes Hakenteil 11 mit einem langen Tragschenkel 12 und einem U-Bügel 13, der in einen unteren Längs- oder Querschenkel 14 ausläuft, sowie ein unteres Hakenteil 16 mit einem kurzen Tragschenkel 17 und einem U-Bogel 18, der ebenfalls einen unteren Längs- oder Querschenkel 19 hat. Zwischen den Hakenteilen 11, 16 ist ein Brückenteil 15 angeordnet, das eine ebene Wange 21 und einen davon oben z.B. rechtwinkelig abgekanteten Tragwinkel 31 aufweist, Insbesondere der lange Tragschenkel 12 kann vor allem im mittleren und/oder unteren Bereich durch eine längsverlaufende Wölbung, Sicke o.dgl. versteift sein. Das Brückenteil 15 kann auch zwischen Hakenteilen mit gleichlangen Tragschenkeln eingesetzt werden. Alle drei Stützkomponenten 11, 15, 18 bestehen bevorzugt aus Metall, namentlich Aluminium oder verzinktem Stahl.

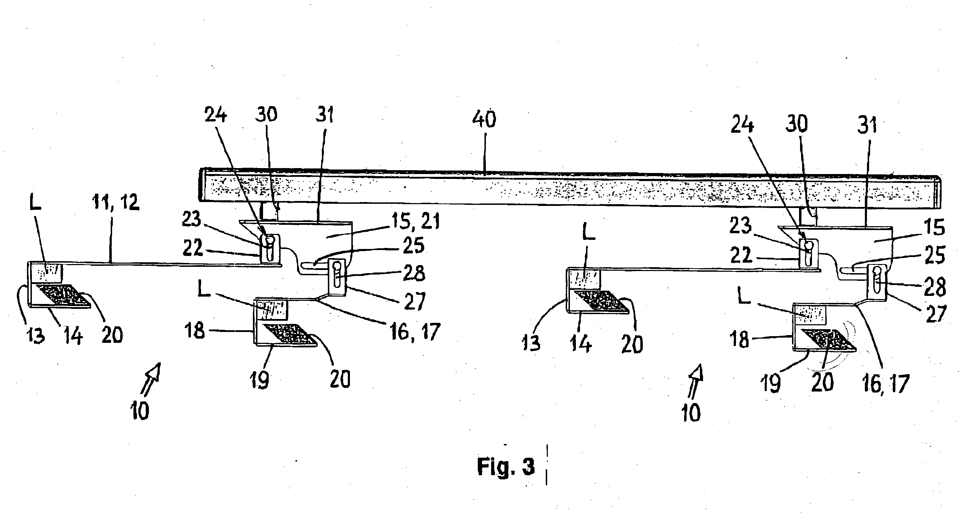

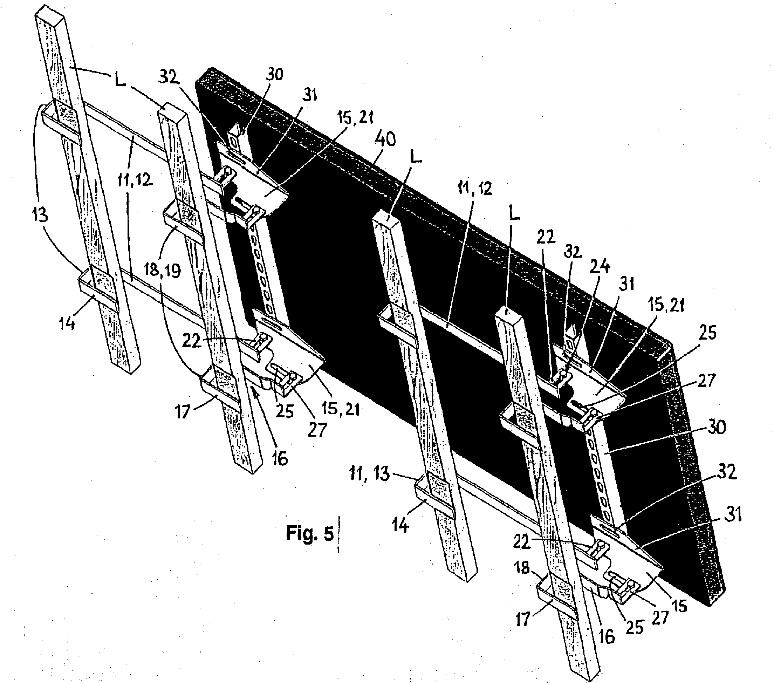

Die Stützkomponenten 11, 15, 16 sind auf einer Dachunterkonstruktion montierbar und durch Verschraubungen einstellbar miteinander zu verbinden. Dazu hat das obere Hakenteil 11 am freien Ende des langen Tragschenkels 12 eine davon im Winkel, insbesondere senkrecht abstehende Lasche 22 mit einem Langloch 23; analog weist das untere Hakenteil 16 an seinem kurzen Tragschenkel 17 eine davon im Winkel, insbesondere senkrecht abstehende Lasche 27 mit einem Langloch 28 auf. Das Brückenteil 15 hat in der Wange 21 in einem unteren Bereich, der dem unteren Hakenteil 16 zugeordnet Ist, einen Schlitz 25, der quer zu dem Langloch 28 verläuft. In einem oberen Bereich kann das Brückenteil 15 ein Rundloch 24 aufweisen (Fig. 3 und 5). Außerdem ist das Brückenteil 15 im Tragwinkel 31 mit einem dem oberen Hakenteil 11 zugeordneten Schlitz 32 versehen, der parallel zu der Wange 21 und quer zu dem Langloch 23 verläuft.

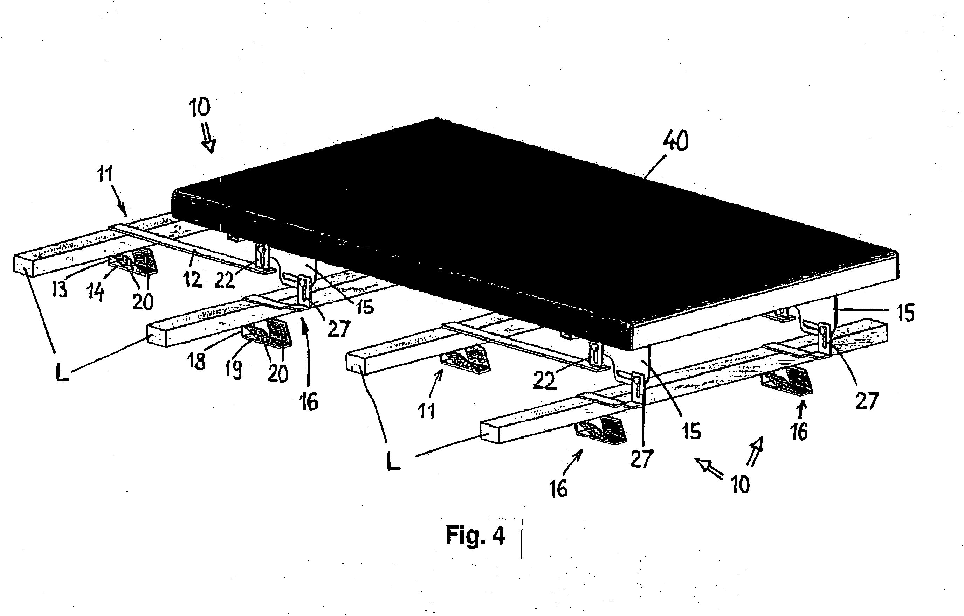

Man erkennt, daß die Anordnung der Langlöcher 23. 28 bzw. Schlitze 25, 32 eine Verstellung der drei Stützkomponenten 11, 15, 16 zueinander auf beachtlich langer Strecke ermöglicht, so daß man örtlichen Gegebenheiten einer Montage auf einem Dach gut Rechnung tragen kann. Das Brückenteil 15 läßt sich dank der Langloch-verbindungen sowohl in der Höhe als auch entlang der Dachneigung verschieben. Es ist außerdem in Grenzen schwenkbar, nämlich um eine das Rundloch 24 durchsetzende Schraube der Verbindung mit dem Langloch 23 der Lasche 22 des oberen Hakenteils 11, was eine Winkel-Einstellung z.B. einer Solarkollektorplatte 40 (Fig. 3 bis 5) in Bezug auf die Dachhaut erlaubt.

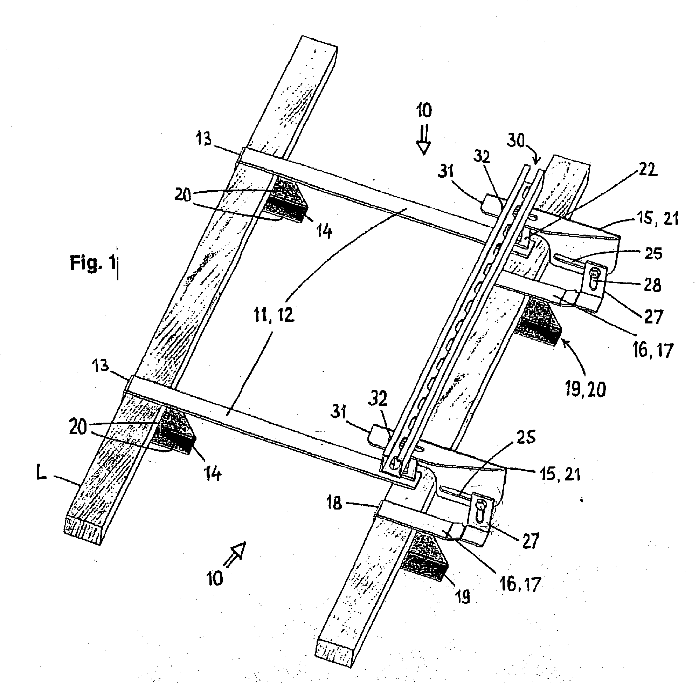

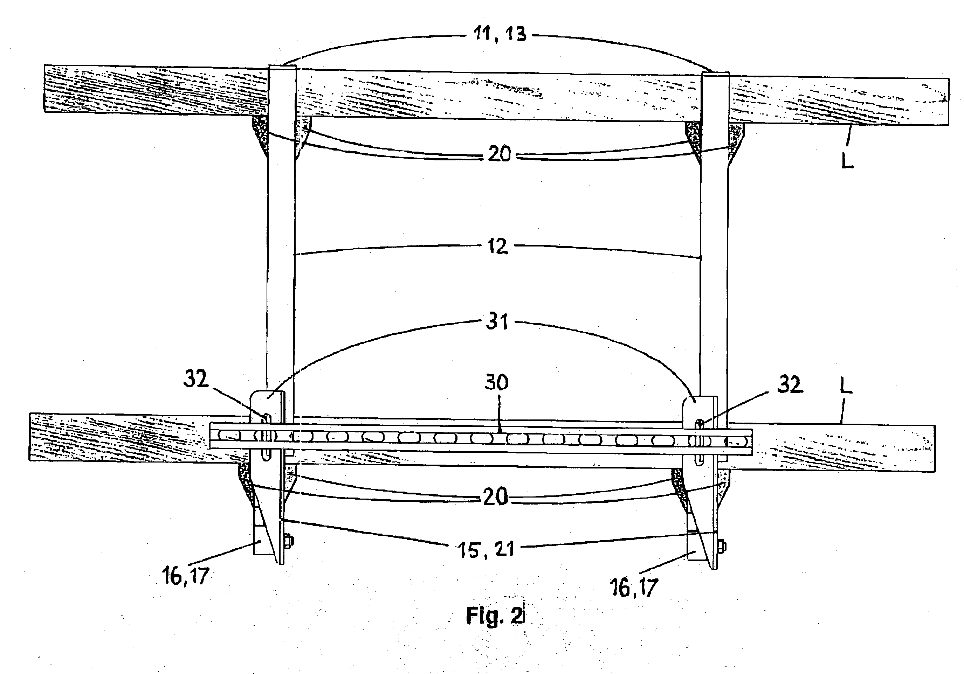

Fig. 1 zeigt zwei Halterungen, die parallel zueinander und In gleicher Ausrichtung an Dachlatten L In einem Abstand eingehängt sind, der durch (nicht dargestellte) Dachdeckungselemente bestimmt ist. Mit seinem Bügel 18 übergreift das untere Hakenteil 16 eine untere Dachlatte L (im Bild rechts), wobei sich die Sicherungsflügel 20 daran von unten anlegen. Fluchtend mit dem unteren Hakenteil 16 ist das obere Hakantell 11 an einer oberen Latte L eingehängt, so daß die Flügel 20 daran von unten angreifen. An den Laschen 22 und 27 der Hakentelle 11,16 Ist die Wange 21 des Brückenteils 15 angeschraubt. Auf der Auflagefläche des Tragwinkels 31 ruht eine C-Schiene 30, die in ihrem Bodenteil eine Reihe von Langlöchern aufweist und an den Schlitzen 32 der Tragwinkel 31 verschraubbar ist. Man erkennt, daß durch die Kreuzanordnung der diversen Langlöcher bzw. Schlitze 23, 25, 28, 32 Richtungs, und Winkelverstellungen der drei Stützelemente zueinander möglich sind, wobei die Befestigungsebene der Wange 15 beibehalten bleibt. Das ist auch aus der Draufsicht in Fig. 2 ersichtlich.

Im Ausführungsbeispiel der Fig. 3 bis 5 tragen zwei Halterungen 10 gemeinsam eine Solarkollektorplatte 40, die mittels der C-Schienen 30 an den Tragwinkein 31 der Brückentelle 15 befestigt ist. Man sieht, daß es mittels dieser Zwischenglieder 15 möglich ist, die Lage der von ihnen getragenen Solarplatte 40 sowohl in der Höhe als auch im Winkel zu der (hier nicht dargestellten) Dachhaut je nach den örtlichen Gegebenheiten optimal einzujustieren.

Für die Festigkeit der Verbindung sind die übergreifenden Kopfteile 13, 18 der Hakenteile 11, 16 und die Sicherungsflügel 20 von Bedeutung, die sich an den Dachlatten von unten verhaken und damit eine dauerhafte Befestigung gewährleisten, ohne daß an der Dachunterkonstruktion ein Vernageln oder Verschrauben notwendig wäre.

Die Montage der Halterungen 10 ist einfach. Ausgehend von einer bereits verlegten unteren Ziegelreihe wird das untere Hakenteil 16 an der gewünschten Stelle über den dort befindlichen Ziegel und die untere Dachlatte L geschoben. Die Flügel 20 fixieren den Längsschenkel 19 und damit das Hakenteil 16. Nachdem die nächsthöhere Ziegelreihe verlegt ist, wird das obere Hakenteil 11 fluchtend über den Dachziegel und die zugeordnete obere Dachlatte L geschoben. Nun kann das Brückenteil 15 mit fluchtender Wange 21 an den Laschen 22, 27 vorläufig angebracht und - nach passender Justierung - festgeschraubt werden. Je nach Bedarf werden quer zur Fluchtrichtung der Stützkomponenten 11, 15, 16 daran C-Schienen 30, Stützplatten oder anderes Dachzubehör befestigt.

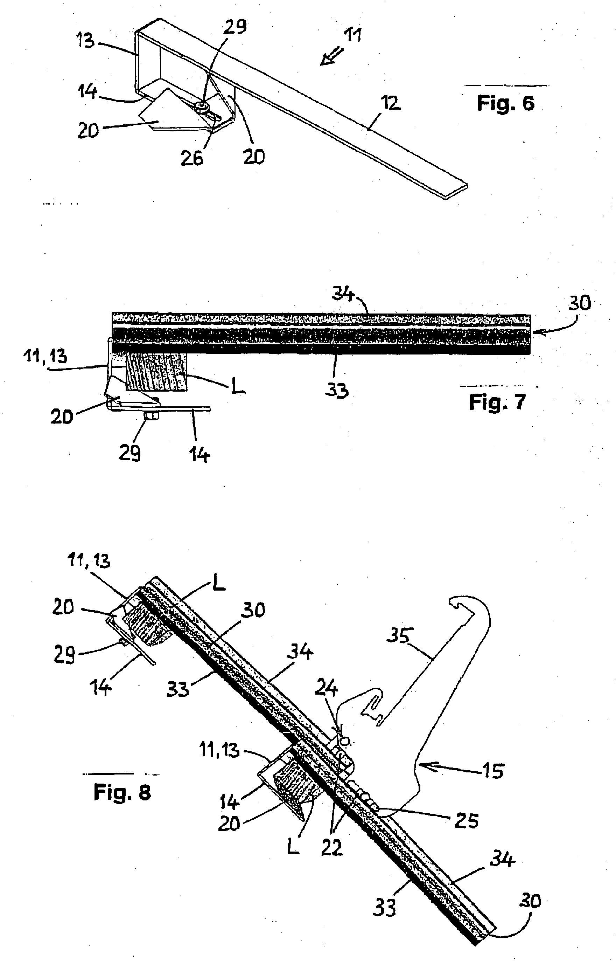

Fig. 6 veranschaulicht eine abgewandelte Bauform eines Hakenteils 11, bei dem am U-artlgen Bügel 13 ein Schenkel 14 vorhanden ist, der einen Schlitz bzw. ein Langloch 26 zur verstellbaren Befestigung der Sicherungsflügel 20 mittels einer Schraube 29 aufweist. Das verschafft eine zusätzliche Verstellbarkeit, so daß beispielsweise zwei oder mehr übereinander angeordnete Hakenteile 11 mit gleichlangen Tragschenkeln 12 jeweils durch ein Brückenteil 15 miteinander verbunden werden kfinnen. Im Beispiel von Fig. 7 und 8 stützen sich diese Hakenteile 11, die auf ihren Tragschenkeln jeweils eine C-Schlene 30 tragen, unter Zudschenlage je einer Dämmleiste 33 an Dachlatten L ab, wobei die Sicherungsflügel 20 sich an den Lattenabstand anpassen lassen.

Man ersieht aus Flg. 8, daß in der nach außen/oben offenen C-Schiene 30 jeweils eine Stegleiste 34 gehaltert bzw. befestigt sein kann, welche Langloch-Verbindungen zu dem zwischen den Hakenteilen 11 sitzenden Brückenteil 15 aufweisen. Dieses ist hier einteilig mit einer Schneefangstütze 35, welche hochkant zur Dachfläche steht und Auslauf-Enden mit einander zugewandten Öffnungen aufweist, in die z.B. ein (nicht gezeichnetes) Schneefanggitter federnd eingesetzt werden kann.

Wesentliche Vorteile der Erfindung beruhen darauf, daß die In ihrem Aufbau ähnlichen Hakenteile 11, 16 an der Dachunterkonstruktion ebenso einfach wie sicher anbringbar sind und daß das neuartige Brückenteil 15 zwischen den Hakenteilen 11, 16 an ihnen in justierbarer Weise befestigt werden kann, so daß das darauf montierte Dachzubehör sich optimal positionieren läßt. Die Erfindung ist daher nicht auf die beschriebenen Ausführungsformen beschränkt, sondern auf vielfältige Weise abwandelbar. So kann das Brüchenteil 15 etwa segelförmig gestaltet, also zum oberen Hakenteil 11 hin bzw. von diesem hochkant abstehend verjüngt und zum unteren Hakenteil 16 hin verbreitert sein. Das ermöglicht auf einfache Weise einen Neigungsausgleich zur Waagrechten hin, aber auch einen Kippwinkel noch darüber hinaus, falls dies erwünscht wäre. Außerdem kann das Brückenteil 15 einstückig mit einer hochkant abstehenden Stütze sein, die einander zugewandte Aufnahmeöffnungen zum Einsetzen eines Schneefangelements hat. Ferner sind die Langloch-Laschen 22, 27 zwar zur Vereinfachung von Fertigung und Lagerhaltung bevorzugt gleichhoch, aber das ist nicht unbedingt notwendig, denn verschieden hohe Langloch-Laschen 22, 27 erleichtern eine von der Dachneigung abweichende Befestigung, z.B. von Solarkollektorplatten. Eine weitere Variante besteht darin, die Langloch-Laschen 22, 27 als (Winkel-)Platten mit beispielsweise strahlenförmig oder V-artig angeordneten Schlitzen auszubilden, so daß an einem Hakenteil 11 bzw. 16 oder an beiden Hakenteilen 11, 16 zwei oder mehr Stellrichtungen für das Brückenteil 15 vorgebbar sind.
Man erkennt, daß eine Halterung 10 zum Befestigen von Dachzubehör auf geneigten Dächern in bevorzugter Ausführungsform wenigstens drei Stützkomponenten aufweist, die an Langloch-Verbindungen 23, 25, 28 justier- und verschraubbar sind, wobei zumindest ein Zwischenglied 15 als Brückenteil dient, das z.B. Schienen oder sonstige Lastaufnahmen trägt. Ein oberes Hakenteil 11 mit langem, teilweise gewölbtem Tragschenkel 12 und ein unteres Hakenteil 16 mit kurzem Tragschenkel 17 sind an ihren Enden jeweils mit Langloch-Laschen 22 bzw, 27 versehen, denen Ausnehmungen des Brückenteils 15 zugeordnet sind, insbesondere ein oberes Rundloch 24 sowie ein unterer Schlitz 25. Schenkel 14, 19 eines U-Bügels 13, 18 tragen zumindest zwei nach oben/innen abstehende, z.B. federelastische Sicherungsflügel 20, die an Dachlatten L von unten verhakbar sind. Das Brückenteil 15 hat vorzugsweise eine im wesentlichen ebene, zu den Hakenteilen 11, 16 senkrecht angeordnete Wange 21, ist gegebenenfalls nach oben verjüngt bzw. nach unten breiter und steht im wesentlichen senkrecht zu den Hakenteilen 11, 16. Diese sind zum Übergreifen des Kopfendes von Dachdeckmitteln und/oder einer Dachlatte L deren Profil angepaßt und weisen Bügel 13, 18 sowie Schenkel 14, 19 mit Rast- bzw. Arretiermitteln auf, die z.B. aus Draht- oder Blechmaterial gefertigt und/oder plastisch verformbar sind, um an der Unterseite des Kopfendes der Dachdeckmittel bzw. der Dachlatte L kraft- und/oder formschlüssig anzugreifen.

### Bezugszeichenliste

### L Dachlatte(n)

- 10: Halterung
- 11: oberes Hakenteil
- 12: langer Tragschenkel
- 13: U-Bügel
- 14: (Längs-)Schenkel
- 15: Zwischenglied / Brückenteil
- 16: unteres Hakenteil
- 17: kurzer Tragschenkel
- 18: U-Bügel
- 19: (Längs-)Schenkel
- 20: Sicherungsflügel
- 21: Wange
- 22: Langloch-Lasche
- 23: Langloch
- 24: Rundloch
- 25: Schlitz
- 26: Langloch
- 27: Langloch-Lasche
- 28: Langloch
- 29: Schraube
- 30: C-Schiene
- 31: Tragwinkel
- 32: Schlitz
- 33: Dämmlelste
- 34: Stegleiste
- 35: Schneefangstütze
- 40: Solarplatte

## Patentansprüche

1. Halterung (10) zum Befestigen von Dachzubehör auf geneigten Dächern, insbesondere aus Metall, bestehend aus drei miteinander an Langloch-Verbindungen (23, 25, 28) justier- und verschraubbaren Stützkomponenten, nämlich zwei Hakenteilen (11, 16) und einem als tragendes Brückenteil ausgebildeten Zwischenglied (15), wobei die Hakenteile (11, 16) jeweils einen Tragschenkel (12; 17) aufweisen und durch justier- und verschraubbare Langloch-Verbindungen (23, 25, 28) miteinander verbindbar sind, **dadurch gekennzeichnet, dass** jeder Tragschenkel (12; 17) eine davon im Winkel, insbesondere an einem Ende im rechten Winkel abstehende Langloch-Lasche (22; 27) aufweist, denen Ausnehmungen (24, 25) des Zwischenglieds (15) zugeordnet sind, und daß das im bestimmungsgemäß angeordneten Zustand der Halterung (10) obere Hakenteil (11) einen langen Tragschenkel (12) und das untere Hakenteil (16) einen kurzen Tragschenkel (17) aufweist.

2. Halterung nach Anspruch 1, **dadurch gekennzeichnet, daß** das obere Ende jedes Hakenteils (11; 16) einen U-artigen Bügel (13; 18) hat, der an seinem unteren Ende frei in einen Schenkel (14; 19) ausläuft, welcher näherungsweise parallel oder senkrecht zu dem Tragschenkel (12; 17) steht.

3. Halterung nach Anspruch 1 oder 2, **dadurch gekennzeichnet, daß** zumindest der lange Tragschenkel (12) einen Bereich mit erhöhtem Querschnitts-Widerstandsmoment aufweist.

4. Halterung nach einem der vorgehenden Ansprüche, **dadurch gekennzeichnet, daß** der lange Tragschenkel (12) in seinem mittleren und/oder unteren Bereich durch eine Wölbung, Sicke o.dgl. versteift ist.

5. Halterung nach einem der Ansprüche 2 bis 4, **dadurch gekennzeichnet, daß** der bzw. jeder Schenkel (14; 19) des Bügels (13, 18) nach oben bzw. innen abstehende Flügel (20) trägt.

6. Halterung nach Anspruch 5, **dadurch gekennzeichnet, daß** die Flügel (20) federelastisch sind.

7. Halterung nach Anspruch 5, **dadurch gekennzeichnet, daß** die Flügel (20) starr und auf einem oder dem Schenkel (14; 19) verschiebbar sind.

8. Halterung nach einem der Ansprüche 5 bis 7, **dadurch gekennzeichnet, daß** zumindest ein unteres Flügelpaar (20) aus um z.B. unter 45° abgekantetem, starrem oder elastischem Material hergestellt ist.

9. Halterung nach einem der vorhergehenden Ansprüche, **dadurch gekennzeichnet, daß** das Brückenteil (15) zu dem oberen Hakenteil (11) hin einen Schlitz (25) aufweist, der quer zu dem Langloch (28) einer Lasche (27) des benachbarten Tragechenkels (17) verläuft.

10. Halterung nach einem der Ansprüche 1 bis 9, **dadurch gekennzeichnet, daß** das Brückenteil (15) als ebene Wange gestaltet ist, vorzugsweise in Form eines spitzwinkeligen oder trapezförmigen, nach unten breiteren Flachkörpers.

11. Halterung nach Anspruch 10, **dadurch gekennzeichnet, daß** das Brückenteil (15) einstückig mit einer hochkantstehenden Stütze ist, die einander zugewandte Aufnahmeöffnungen zum Einsetzen eines Schneefangelements aufweist.

12. Halterung nach einem der vorhergehenden Ansprüche, **dadurch gekennzeichnet, daß** das Brückenteil (15) in einem oberen oder unteren Bereich zur Bildung eines Tragwinkels (31) mit einer Auflagefläche abgekantet ist.

13. Halterung nach einem der Ansprüche 9 bis 12, **dadurch gekennzeichnet, daß** das Brückenteil (15) zum oberen Hakenteil (11) hin, z.B. nahe einer Winkelspitze, ein Rundloch (24) aufweist und durch dieses hindurch mit einer Langloch-Lasche (22) des benachbarten Tragschenkels (12) verschraubbar ist.

14. Halterung nach einem der vorhergehenden Ansprüche, **dadurch gekennzeichnet, daß** die Hakenteile (11, 16) jeweils einen oberen Tragschenkel (12; 17) und einen U-artigen, frei in einen unteren Schenkel (14; 19) auslaufenden Bügel (13; 18) aufweisen, welcher zum Übergreifen des Kopfendes von Dachdeckmitteln und/oder einer Dachlatte (L) deren Profil angepaßt ist, wobei der untere Schenkel (14; 19) starre oder elastische Rast- bzw. Arretiermittel zum kraft- und/ oder formschlüssigen Angriff an der Unterseite des Kopfendes bzw. der Dachlatte (L) aufweist.

15. Halterung nach Anspruch 14, **dadurch gekennzeichnet, daß** als Rast- bzw. Arretiermittel wenigstens zwei Sicherungsflügel (20) nebeneinander angeordnet sind, insbesondere mit Abstand zueinander.

16. Halterung nach Anspruch 15, **dadurch gekennzeichnet, daß** die Sicherungsflügel (20) untereinander einstückig ausgebildet sind.

17. Halterung nach Anspruch 15 oder 16, **dadurch gekennzeichnet, daß** die Sicherungsflügel (20) mit dem oder einem unteren Schenkel (14 bzw. 19) einstückig oder starr verbunden sind.

18. Halterung nach Anspruch 15 oder 16, **dadurch gekennzeichnet, daß** die Sicherungsflügel (20) mit dem unteren Schenkel (14) verstellbar verbunden sind, z.B. entlang eines Langlochs (26).

19. Halterung nach einem der Ansprüche 14 bis 18, **dadurch gekennzeichnet, daß** die Rast- bzw. Arretiermittel aus Drahtmaterial oder flächigem Blechmaterial gefertigt und/oder plastisch verformbar sind.

20. Halterung nach einem der vorhergehenden Ansprüche, **dadurch gekennzeichnet, daß** der untere Schenkel (14; 19) als Federzunge ausgebildet ist.

21. Halterung nach Anspruch 20, **dadurch gekennzeichnet, daß** der untere Schenkel (14; 19) unter Bildung von Schultern (70) stufen- oder treppenförmig abgesetzt ist.

## Claims

1. Fixture (10) for securing roof accessories on pitched roofs, particularly those made of metal, consisting of three support components which can be adjusted and screwed to one another at slot-type connections (23, 25, 28), namely two hook members (11, 16) and one intermediate member (15) configured as a supporting bridge member, the hook members (11, 16) each comprising a support leg (12; 17) and being connectable to one another by means of adjustable and screwable slot-type connections (23, 25, 28), **characterised in that** each support leg (12; 17) comprises a slot plate (22; 27) at an angle thereto, particularly projecting at right-angles at one end, said slot plate being associated with cut-outs (24, 25) in the intermediate member (15), and **in that** the upper hook member (11) when the fixture (10) is arranged in its intended position comprises a long support leg (12) and the lower hook member (16) comprises a short support leg (17).

2. Fixture according to claim 1, **characterised in that** the upper end of each hook member (11; 16) has a U-shaped bracket (13; 18) which, at its lower end, extends freely into a leg (14; 19) which is located substantially parallel or perpendicular to the support leg (12; 17).

3. Fixture according to claim 1 or 2, **characterised in that** at least the long support leg (12) has a region with an increased cross-sectional modulus of resistance.

4. Fixture according to one of the preceding claims, **characterised in that** the long support leg (12) is reinforced in its central and/or lower region by a convexity, corrugation or the like.

5. Fixture according to one of claims 2 to 4, **characterised in that** the or each leg (14; 19) of the bracket (13, 18) is provided with upwardly or inwardly projecting fins (20).

6. Fixture according to claim 5, **characterised in that** the fins (20) are springily resilient.

7. Fixture according to claim 5, **characterised in that** the fins (20) are rigid and are movable along the or each leg (14; 19).

8. Fixture according to one of claims 5 to 7, **characterised in that** at least one lower pair of fins (20) is produced from rigid or elastic material which is bent at 45°, for example.

9. Fixture according to one of the preceding claims, **characterised in that** the bridge member (15) comprises, towards the upper hook member (11), a slot (25) which extends at right-angles to the long hole (28) in a plate (27) of the adjacent support leg (17).

10. Fixture according to one of claims 1 to 9, **characterised in that** the bridge member (15) is configured as a flat beam, preferably in the form of an acute-angled or trapezoidal flat body which widens out downwardly.

11. Fixture according to claim 10, **characterised in that** the bridge member (15) is formed in one piece with a vertically standing support which comprises accommodation openings facing one another for the insertion of a snow guard element.

12. Fixture according to one of the preceding claims, **characterised in that** the bridge member (15) is angled in an upper or lower region to form a support angle (31) with a bearing surface.

13. Fixture according to one of claims 9 to 12, **characterised in that** the bridge member (15) comprises a round hole (24) towards the upper hook member (11), e.g. near an apex, and can be screwed through this hole (24) to a slot plate (22) of the adjacent support leg (12).

14. Fixture according to one of the preceding claims, **characterised in that** the hook members (11, 16) each comprise an upper support leg (12; 17) and a U-shaped bracket (13; 18) extending freely into a lower leg (14; 19), which bracket, in order to engage over the head end of roof covering means and/or a roof batten (L), is adapted to the profile thereof, the lower leg (14; 19) comprising rigid or elastic latching or locking means for frictionally and/or positively engaging on the underside of the head end or the roof batten (L).

15. Fixture according to claim 14, **characterised in that** as latching or locking means at least two securing fins (20) are arranged side by side, particularly at a spacing from one another.

16. Fixture according to claim 15, **characterised in that** the securing fins (20) are formed in one piece with one another.

17. Fixture according to claim 15 or 16, **characterised in that** the securing fins (20) are integrally or rigidly connected to the or each lower leg (14 or 19).

18. Fixture according to claim 15 or 16, **characterised in that** the securing fins (20) are adjustably connected to the lower leg (14), e.g. along a long hole (26).

19. Fixture according to one of claims 14 to 18, **characterised in that** the latching or locking means are made from wire material or flat sheet metal material and/or are plastically deformable.

20. Fixture according to one of the preceding claims, **characterised in that** the lower leg (14; 19) is configured as a spring tongue.

21. Fixture according to claim 20, **characterised in that** the lower leg (14; 19) is offset in a step or steps, thereby forming shoulders (70).

## Revendications

1. Fixation (10) pour fixer des accessoires de toit sur des toitures inclinées, en particulier en métal, constituée de trois composants d'appui réglables et vissables mutuellement sur des jonctions à trous oblongs (23, 25, 28), à savoir deux parties d'accrochage (11, 16) et un élément intermédiaire (15) conçu en partie de pontage porteuse, dans laquelle les parties d'accrochage (11, 16) présentent respectivement une branche porteuse (12 ; 17) et peuvent être reliées l'une à l'autre par des jonctions à trous oblongs réglables et vissables (23, 25, 28), **caractérisée en ce que** chaque branche porteuse (12 ; 17) présente une éclisse à trou oblong (22 ; 27) qui s'écarte en équerre, en particulier à angle droit à une extrémité, à laquelle sont affectées des cavités (24, 25) de l'élément intermédiaire (15), et **en ce que**, dans l'état de la fixation (10) aménagée en fonction de la destination, la partie d'accrochage supérieure (11) présente une branche porteuse longue (12) et la partie d'accrochage inférieure (16) une branche porteuse courte (17).

2. Fixation selon la revendication 1, **caractérisée en ce que** l'extrémité supérieure de chaque partie d'accrochage (11 ; 16) a un étrier en forme de U (13 ; 18) qui s'étend, à son extrémité inférieure, librement dans une branche (14 ; 19) qui est approximativement parallèle ou perpendiculaire à la branche porteuse (12 ; 17).

3. Fixation selon la revendication 1 ou la revendication 2, **caractérisée en ce qu'**au moins la branche porteuse longue (12) présente une zone à couple résistant plus élevé en coupe transversale.

4. Fixation selon l'une quelconque des revendications précédentes, **caractérisée en ce que** la branche porteuse longue (12) est renforcée dans sa zone centrale et/ou inférieure par un bombement, une moulure ou analogue.

5. Fixation selon l'une quelconque des revendications 2 à 4, **caractérisée en ce que** la ou chaque branche (14 ; 19) de l'étrier (13, 18) porte des ailes (20) déviant vers le haut ou vers l'intérieur.

6. Fixation selon la revendication 5, **caractérisée en ce que** les ailes (20) sont élastiques comme des ressorts.

7. Fixation selon la revendication 5, **caractérisée en ce que** les ailes (20) sont rigides et peuvent coulisser sur une ou la branche (14 ; 19).

8. Fixation selon l'une quelconque des revendications 5 à 7, **caractérisée en ce qu'**au moins une paire d'ailes inférieure (20) est constituée d'un matériau rigide ou élastique biseauté par exemple sous un angle de 45°.

9. Fixation selon l'une quelconque des revendications précédentes, **caractérisée en ce que** la partie de pontage (15) présente vers la partie d'accrochage supérieure (11) une fente (25) qui s'étend transversalement au trou oblong (28) d'une éclisse (27) de la branche porteuse adjacente (17).

10. Fixation selon l'une quelconque des revendications 1 à 9, **caractérisée en ce que** la partie de pontage (15) est conformée en face plate, de préférence sous la forme d'un corps plat à angle aigu ou en trapèze plus large vers le bas.

11. Fixation selon la revendication 10, **caractérisée en ce que** la partie de pontage (15) est d'un seul tenant avec un support disposé de chant qui présente des ouvertures réceptrices tournées l'une vers l'autre pour y insérer un élément anti-neige.

12. Fixation selon l'une quelconque des revendications précédentes, **caractérisée en ce que** la partie de pontage (15) est inclinée dans une zone supérieure ou inférieure pour former un angle porteur (31) avec une surface d'appui.

13. Fixation selon l'une quelconque des revendications 9 à 12, **caractérisée en ce que** la partie de pontage (15) présente vers la partie d'accrochage supérieure (11), par exemple à proximité d'une pointe cornière, un trou rond et peut être vissée à travers celui-ci avec une éclisse à trou oblong (22) de la branche porteuse adjacente (12).

14. Fixation selon l'une quelconque des revendications précédentes, **caractérisée en ce que** les parties d'accrochage (11, 16) présentent respectivement une branche porteuse supérieure (12 ; 17) et un étrier (13 ; 18) en forme de U courant librement dans une branche inférieure (14 ; 19), dont le profil est adapté pour imbriquer l'extrémité de tête de moyens de couverture de toit et/ou une latte de toit (L), dans laquelle la branche inférieure (14 ; 19) présente des moyens d'encliquetage ou d'arrêt rigides ou élastiques destinés à se caler par contrainte et/ou par voie mécanique sur la partie inférieure de l'extrémité de tête ou de la latte de toit (L).

15. Fixation selon la revendication 14, **caractérisée en ce qu'**on aménage comme moyens d'encliquetage ou d'arrêt au moins deux ailes de sécurité l'une à côté de l'autre, en particulier avec un espacement entre elles.

16. Fixation selon la revendication 15, **caractérisée en ce que** les ailes de sécurité (20) sont conformées d'une pièce l'une avec l'autre.

17. Fixation selon la revendication 15 ou la revendication 16, **caractérisée en ce que** les ailes de sécurité (20) sont reliées d'une pièce ou de manière rigide avec la ou une branche inférieure (14 ou 19).

18. Fixation selon la revendication 15 ou la revendication 16, **caractérisée en ce que** les ailes de sécurité (20) sont reliées de manière réglable à la branche inférieure (14), par exemple, le long d'un trou oblongue (26).

19. Fixation selon l'une quelconque des revendications 14 à 18, **caractérisée en ce que** les moyens d'encliquetage ou d'arrêt sont constitués d'un matériau en câble ou d'un matériau en tôle plate et/ou peuvent subir une déformation plastique.

20. Fixation selon l'une quelconque des revendications précédentes, **caractérisée en ce que** la branche inférieure (14 ; 19) est conformée en languette élastique.

21. Fixation selon la revendication 20, **caractérisée en ce que** la branche inférieure (14 ; 19) est étagés en degrés ou en marches pour former des épaulements (70).
